# EUROPEAN PATENT APPLICATION

(11) **EP 4 491 677 A1**
(43) Date of publication of application: **15.01.2025**
(21) Application number: 23766427.1
(22) Date of filing: 13.02.2023
(51) Int. Cl.: C09D 4/02, C09D 183/00, C07F 7/18, C09K 3/18

(54) **COMPOSITION COMPRISING METHACRYLAMIDE GROUP-CONTAINING ORGANIC SILICON COMPOUND AND ARTICLE SURFACE-TREATED WITH SAID COMPOSITION**

(30) Priority: 07.03.2022 JP 2022034361
(71) Applicant: SHIN-ETSU CHEMICAL CO., LTD., Tokyo 1000005 (JP)
(72) Inventor: YASUDA, Shigeki, Annaka-shi, Gunma 379-0224 (JP); HIROKAMI, Munenao, Annaka-shi, Gunma 379-0224 (JP)
(74) Representative: Mewburn Ellis LLP
(86) International application number: PCT/JP2023/004743
(87) International publication number: WO 2023/171247

(57) **Abstract**

Provided is a composition comprising a methacrylamide group-containing organic silicon compound represented by formula (1) and an organic silicon compound represented by formula (2).

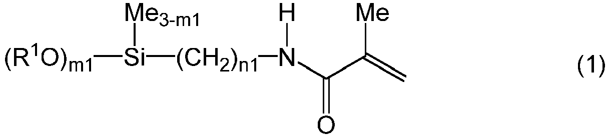

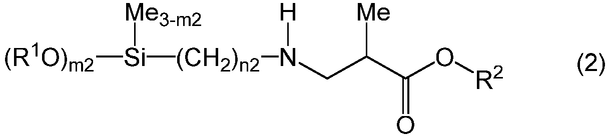

(In the formulae, each R¹ independently represents a C1-10 alkyl group or a C6-10 aryl group, R² represents a methyl group or an ethyl group, Me represents a methyl group, m1 and m2 represent an integer of 1-3, and n1 and n2 represent an integer of 1-12.)

## Description

### TECHNICAL FIELD

The present invention relates to a composition which includes a methacrylamide group-containing organosilicon compound and to an article surface-treated with the composition. More particularly, the invention relates to a composition which includes an organosilicon compound containing on the molecule a methacrylamide group and an organooxysilyl group, and to an article surface-treated with the composition.

### BACKGROUND ART

Organosilicon compounds having hydrolyzable silyl groups and organic reactive groups, owing to the formation of covalent bonds between silanol groups that arise due to hydrolysis of the hydrolyzable silyl groups and hydroxyl groups on the surface of an inorganic material and also to the reaction of the organic groups with organic materials, make it possible to join together organic materials and inorganic materials that normally are difficult to join. This enables organic-inorganic composite materials to be imparted with such properties as heat resistance, water resistance, weather resistance, enhanced mechanical strength, adhesiveness, dispersibility, water repellency and corrosion resistance.

Utilizing these properties, such organosilicon compounds are employed in a broad range of fields, including silane coupling agents, resin additives, surface treatments, textile treatments, adhesives, paint additives and polymer modifiers.

Among such organosilicon compounds, polymerizable group-containing organosilicon compounds such as 3-methacryloylpropyltrimethoxysilane have hitherto been widely used as surface treatments for glass products such as glass cloth and for inorganic fillers, and as adhesive modifiers in curable compositions.

For example, Patent Document 1 reports that the properties of a prepreg can be improved by using glass cloth that has been treated with 3-methacryloylpropyltrimethoxysilane. Patent Document 2 states that the properties of a thermosetting resin can be enhanced by using silica particles which have been treated with 3-methacryloylpropyltrimethoxysilane.

Such surface treatment of glass cloth and inorganic fillers typically involves the use of an aqueous solution prepared by dissolving about 1% of a given organosilicon compound in water whose acidity has been adjusted with an acid such as formic acid or acetic acid. At this time, when an organosilicon compound having an alkoxysilyl group is dissolved in water, following hydrolysis of the alkoxysilyl group within the aqueous solution, condensation between molecules gradually proceeds, the molecular weight increases and insoluble matter separates out in the water. Polymerizable group-containing organosilicon compounds such as 3-methacryloylpropyltrimethoxysilane similarly have the drawback of a low stability when rendered into an aqueous solution and thus have a short pot life as surface treatment solutions.

### PRIOR ART DOCUMENTS

### PATENT DOCUMENTS

Patent Document 1: WO 2020/194772
Patent Document 2: WO 2019/103086

### SUMMARY OF INVENTION

### TECHNICAL PROBLEM

In light of the above, the object of the present invention is to provide a composition that includes a polymerizable group and hydrolyzable silyl group-containing organosilicon compound, which composition has an excellent stability when rendered into an aqueous solution.

### SOLUTION TO PROBLEM

The inventors have conducted intensive investigations in order to achieve the above object. As a result, they have discovered that aqueous solutions which include a methacrylamide group and organooxy group-containing organosilicon compound and a specific organosilicon compound having a methacrylate ester site have an excellent stability. This discovery ultimately led to the present invention.

Accordingly, the invention provides:
1. A composition which includes a methacrylamide group-containing organosilicon compound of formula (1) below and an organosilicon compound of formula (2) below 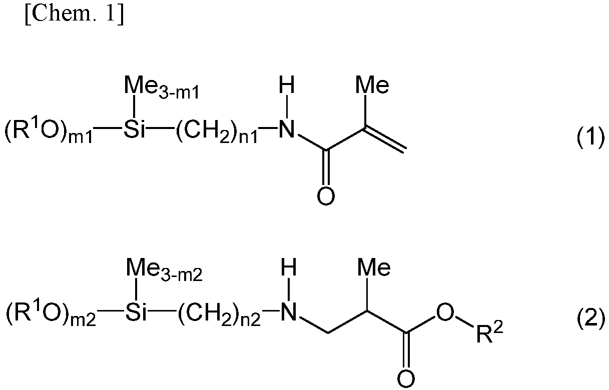 (wherein each R¹ is independently an alkyl group of 1 to 10 carbon atoms or an aryl group of 6 to 10 carbon atoms, R² is a methyl group or an ethyl group, Me stands for a methyl group, m1 and m2 are integers from 1 to 3, and n1 and n2 are integers from 1 to 12);
2. The composition of 1 above wherein, in formulas (1) and (2), R¹ is a methyl group and n1 and n2 are each 3;
3. The composition of 1 or 2 above, wherein the content of the organosilicon compound of formula (2) is from 0.01 to 20 parts by weight per 100 parts by weight of the methacrylamide group-containing organosilicon compound of formula (1);
4. The composition of any of 1 to 3 above which further includes water, wherein the methacrylamide group-containing organosilicon compound of formula (1) and the organosilicon compound of formula (2) are dissolved in the water;
5. The composition of 4 above, wherein the water is water that has been adjusted to acidity; and
6. An article that has been surface treated with the composition of any of 1 to 5 above.

### ADVANTAGEOUS EFFECTS OF INVENTION

The inventive composition which includes a methacrylamide group and organooxy group-containing organosilicon compound has an excellent stability when rendered into an aqueous solution. Articles that are surface treated with the inventive composition have an excellent strength.

### DESCRIPTION OF EMBODIMENTS

The invention is described in detail below.

The composition according to this invention includes a methacrylamide group-containing organosilicon compound of formula (1) below (referred to below as "Compound (1)") and an organosilicon compound of formula (2) below (referred to below as "Compound (2)"), and has an excellent stability when rendered into an aqueous solution.

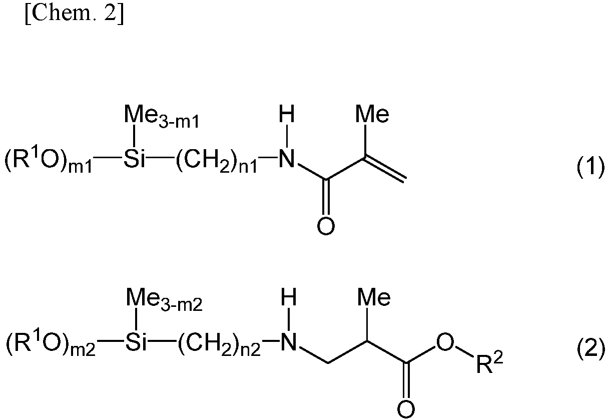

In the formulas, each R¹ is independently an alkyl group of 1 to 10 carbon atoms, preferably 1 to 8 carbon atoms, and more preferably 1 to 6 carbon atoms or an aryl group of 6 to 10 carbon atoms, preferably 6 to 8 carbon atoms. R² is a methyl group or an ethyl group, Me stands for a methyl group, m1 and m2 are integers from 1 to 3, and n1 and n2 are integers from 1 to 12.

The alkyl group of 1 to 10 carbon atoms represented by R¹ may be linear, cyclic or branched. Specific examples include methyl, ethyl, n-propyl, i-propyl, n-butyl, s-butyl, t-butyl, n-pentyl, n-hexyl, n-heptyl, n-octyl, n-nonyl, n-decyl, cyclopropyl, cyclobutyl, cyclopentyl, cyclohexyl, cycloheptyl and cyclooctyl groups.

Specific examples of the aryl group of 6 to 10 carbon atoms include phenyl, α-naphthyl and β-naphthyl groups.

Of these, R¹ is preferably an alkyl group of 1 to 3 carbon atoms. Methyl and ethyl groups are more preferred; a methyl groups is even more preferred.

The symbols m1 and m2 represent integers from 1 to 3, and are preferably 2 or 3. The symbols n1 and n2 represent integers from 1 to 12. From the standpoint of acquiring the starting materials, these are preferably integers from 1 to 8, more preferably integers from 1 to 4, and still more preferably 3.

Therefore, it is especially preferable for Compound (1) to be one in which R¹ represents a methyl group and n1 is 3, and it is especially preferable for Compound (2) to be one in which R¹ represents a methyl group and n2 is 3.

Specific, non-limiting, examples of Compound (1) include methacrylamidomethyltrimethoxysilane, methacrylamidomethylmethyldimethoxysilane, methacrylamidomethyltriethoxysilane, methacrylamidomethylmethyldiethoxysilane, 3-methacrylamidopropyltrimethoxysilane, 3-methacrylamidopropylmethyldimethoxysilane, 3-methacrylamidopropyltriethoxysilane, 3-methacrylamidopropylmethyldiethoxysilane, 4-methacrylamidobutyltrimethoxysilane, 4-methacrylamidobutylmethyldimethoxysilane, 4-methacrylamidobutyltriethoxysilane, 4-methacrylamidobutylmethyldiethoxysilane, 8-methacrylamidooctyltrimethoxysilane, 8-methacrylamidooctylmethyldimethoxysilane, 8-methacrylamidooctyltriethoxysilane, 8-methacrylamidooctylmethyldiethoxysilane, 12-methacrylamidododecyltrimethoxysilane, 12-methacrylamidododecylmethyldimethoxysilane, 12-methacrylamidododecyltriethoxysilane and 12-methacrylamidododecylmethyldiethoxysilane. These may be used singly or two or more may be used together.

Of these, compounds of the following formulas are preferred. From the standpoints of production and solution preparation, Compound (1-1) and Compound (1-3) are especially preferred. In the formulas below, Me stands for a methyl group and Et stands for an ethyl group.

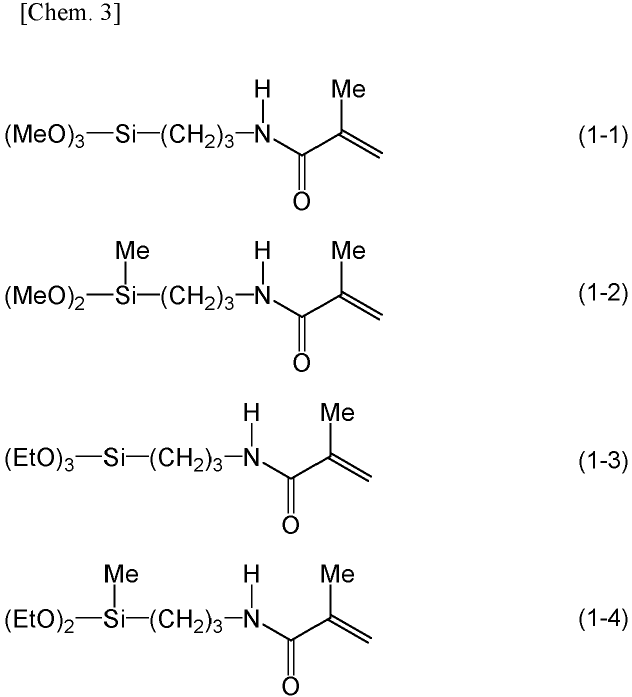

The method for preparing Compound (1) is not particularly limited; a known method of preparation may be used. For example, Compound (1) can be obtained by reacting a methacrylate ester such as methyl methacrylate with an aminoalkylalkoxysilane such as 3-aminopropyltrimethoxysilane at a temperature of between about 100°C and about 200°C and in the presence of a polymerization inhibitor and an amidation catalyst, in accordance with the method described in JP 3561501.

Compound (2) acts as a compatibilizing agent between Compound (1) and water and is able to impart a composition of excellent water solubility.

Specific, non-limiting, examples of Compound (2) include N-(2-methoxycarbonyl-2-methyl)ethyl-3-aminopropyltrimethoxysilane, N-(2-methoxycarbonyl-2-methyl)ethyl-3-aminopropylmethyldimethoxysilane, N-(2-methoxycarbonyl-2-methyl)ethyl-3-aminopropyldimethylmethoxysilane, N-(2-methoxycarbonyl-2-methyl)ethyl-3-aminopropyltriethoxysilane, N-(2-methoxycarbonyl-2-methyl)ethyl-3-aminopropylmethyldiethoxysilane, N-(2-methoxycarbonyl-2-methyl)ethyl-3-aminopropyldimethylethoxysilane, N-(2-ethoxycarbonyl-2-methyl)ethyl-3-aminopropyltrimethoxysilane, N-(2-ethoxycarbonyl-2-methyl)ethyl-3-aminopropylmethyldimethoxysilane, N-(2-ethoxycarbonyl-2-methyl)ethyl-3-aminopropyldimethylmethoxysilane, N-(2-ethoxycarbonyl -2-methyl)ethyl-3 -aminopropyltriethoxysilane, N-(2-ethoxycarbonyl-2-methyl)ethyl-3-aminopropylmethyldiethoxysilane and N-(2-ethoxycarbonyl-2-methyl)ethyl-3-aminopropyldimethylethoxysilane. These may be used singly or two or more may be used together.

Of these, the compounds of the following formulas are preferred. From the standpoints of production and solution preparation, Compound (2-1) and Compound (2-3) are especially preferred. In the formulas below, Me stands for a methyl group and Et stands for an ethyl group.

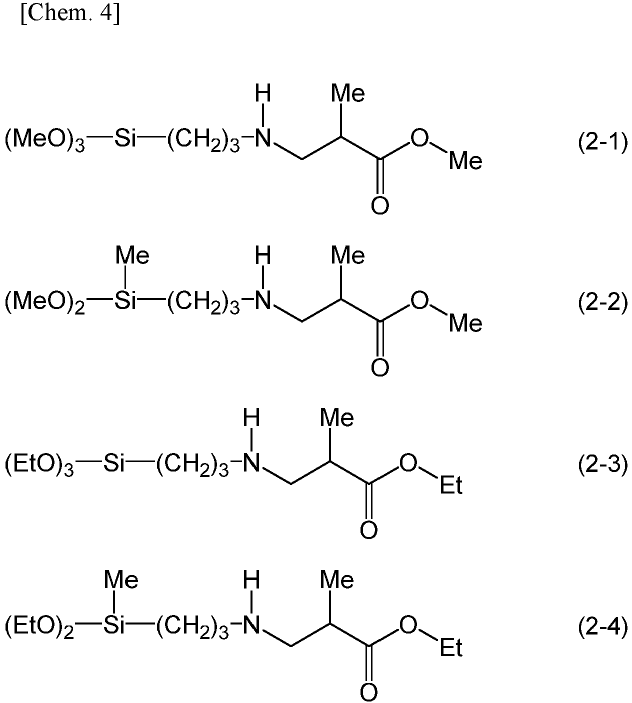

The method for preparing Compound (2) is not particularly limited; a hitherto known method of preparation may be used. For example, Compound (2) can be obtained by reacting a methacrylate ester such as methyl methacrylate with an aminoalkylalkoxysilane such as 3-aminopropyltrimethoxysilane at a temperature of between about 0°C and about 200°C and in a reaction solvent such as methanol, in accordance with the method described in JP 5494233.

The content of Compound (2) within the composition is preferably from 0.01 to 20 parts by weight, more preferably from 0.1 to 15 parts by weight, and even more preferably from 0.5 to 13 parts by weight, per 100 parts by weight of Compound (1).

The inventive composition may include water. In this case, within the composition, Compound (1) and Compound (2) are dissolved in the water.

When water is included, the collective content of Compounds (1) and (2) is preferably from 0.01 to 10 wt%, more preferably from 0.05 to 5 wt%, and even more preferably from 0.1 to 1 wt%.

A water-containing composition (sometimes referred to below as an "aqueous solution") can be prepared by mixing an already prepared mixture of Compounds (1) and (2) (this mixture being a composition that does not contain water) with water and thereby dissolving Compounds (1) and (2) in water.

In this case, a mixture of Compounds (1) and (2) may be added to water or water may be added to this mixture, although a method which adds the mixture to water is preferred, and a method which adds the mixture in a dropwise manner to water is more preferred.

The temperature of addition is preferably between 10°C and 50°C, and more preferably between 15°C and 40°C.

A water-containing composition can also be obtained by separately dissolving Compound (1) and Compound (2) in water. In this case, Compound (1) may first be added to water and Compound (2) subsequently added, or Compound (2) may first be added to water and Compound (1) subsequently added. Or a mixture of Compound (1) and water and a mixture of Compound (2) and water may be separately prepared, and these may then be mixed together to give an aqueous solution (composition) containing Compounds (1) and (2). In either case, Compound (1) or Compound (2) may be added to the water, or the water may be added to Compound (1) or Compound (2). The temperature of addition is the same as mentioned above.

Apart from Compound (1), Compound (2) and water, the inventive composition may also include an organic solvent within a range that does not detract from the advantageous effects of the invention.

The organic solvent is not particularly limited, although an organic solvent having excellent compatibility with water is preferred. Examples include alcohols such as methanol, ethanol, and isopropanol, ethers such as diethyl ether, tetrahydrofuran and 1,4-dioxane, esters such as ethyl acetate, and ketones such as acetone and methyl ethyl ketone. One of these may be used alone or two or more may be used in combination.

In cases where the inventive composition does not use the above organic solvent, from the standpoint of stability, it is preferable to use water that has been adjusted to acidity. The acid for adjusting the water to acidity is exemplified by organic acids such as formic acid, acetic acid and citric acid, and inorganic acids such as hydrochloric acid. When using an acid, the amount added is preferably from 0.001 to 0.5 wt%, and more preferably from 0.01 to 0.1 wt%, of the overall composition. Also, when using an acid, water that has been adjusted to acidity by mixing together the acid and water beforehand may be used, or the inventive composition may be adjusted to acidity by adding the acid thereto.

To enhance the adhesiveness with and adherence to base materials, alkoxy group-containing organosilicon compounds other than Compounds (1) and (2), silazane compounds and the like may be added to the inventive composition.

Specific examples of alkoxy group-containing organosilicon compounds include 3-methacryloxypropyltrimethoxysilane, 3-acryloxypropyltrimethoxysilane, p-styryltrimethoxysilane and 8-methacryloxyoctyltrimethoxysilane. One of these may be used alone or two or more may be used together.

Specific examples of silazane compounds include 1,1,3,3-tetramethyldisilazane, 1,1,1,3,3,3-hexamethyldisilazane, 1,3-divinyl-1,1,3,3-tetramethyldisilazane, 1,1,1,3,3,5,5,5-octamethyltrisilazane, 1,1,3,3,5,5-hexamethylcyclotrisilazane and 1,1,3,3,5,5-trimethyltrivinylcyclotrisilazane. One of these may be used alone or two or more may be used together.

When an alkoxy group-containing organosilicon compound and a silazane structure-containing compound are added, the amount of addition of each is preferably from 0.01 to 0.2 molar equivalent with respect to the combined amount of Compounds (1) and (2).

Where necessary, other additives may be added to the inventive composition within ranges that do not detract from the advantageous effects of the invention. Specific examples of such additives include water-soluble resins, curing catalysts, property modifiers that modify the tensile properties of the cured film that forms, storage stability improving agents, surfactants, metal inactivators, antiozonants, lubricants, pigments and the like.

An article that has been surface-treated with the inventive composition can be obtained by applying the inventive composition to the surface of a base material and drying it under applied heat.

Although the base material is not particularly limited, it is preferably an inorganic material. Examples include inorganic fillers such as silica, titania, zirconia, calcium carbonate, magnesium carbonate, alumina, magnesium oxide, aluminum hydroxide, magnesium hydroxide, talc, clay and mica; various textiles such as monofilament, ply yarn, bulky textured yarn, staple fiber, nonwoven fabric, tape and netting; fiberglass and fiberglass products such as glass strand, glass yarn, glass roving, chopped strand, milled fiber and glass cloth; ceramic materials such as pottery and porcelain, cement, enamel and fine ceramics; metallic materials such as iron, aluminum, copper, silver, gold and magnesium; and various articles in which these materials are used.

Of these, from the standpoint of the reactivity of the organooxysilyl groups, inorganic fillers such as silica and fiberglass and fiberglass products are especially preferred. In cases where the base material is an inorganic filler or fiberglass, it may be mixed with a matrix resin to form a prepreg. Prepregs obtained using the inventive composition have an excellent strength and so can be suitably used in printed circuit boards. Known resins such as thermosetting silicone resins, polyimide resins, maleimide resins, epoxy resins, cyanate resins and (meth)acrylic resins may be used as the matrix resin in the prepreg.

The method of applying the inventive composition onto the surface of a base material is not particularly limited; a method optimal for the shape and other attributes of the material may be suitably selected. Specific examples of methods for direct application to the base material include flow coating (dipping) and spin coating. Kneading treatment involving the addition of the inventive composition to and mixture with a compound consisting of an inorganic filler serving as the base material and a resin as the dispersing medium may also be carried out.

Following application to various base materials, it is preferable for the inventive composition to be dried under applied heat and the solvent driven off and, at the same time, for a chemical reaction to be effected between the alkoxy groups present in the organosilicon compound within the composition and reactive groups on the surface of the base material.

The heating conditions are not particularly limited. The heating temperature may be suitably adjusted according to the heat resistance of the base material and is preferably between 60°C and 180°C, and more preferably between 80°C and 150°C. The heating time also is not particularly limited and may be suitably adjusted according to, for example, the type of base material that is used and the amount in which the inventive composition is used. The heating time is preferably from 1 minute to 2 hours, and more preferably from 5 minutes to 1 hour.

### EXAMPLES

Synthesis Examples, Examples and Comparative Examples are given below by way of illustration, although the invention is not limited by these Examples. In the formulas below, Me stands for a methyl group and Et stands for an ethyl group.

### [1] Synthesis of Organosilicon Compounds

### [Synthesis Example 1]

A methacrylamide group-containing organosilicon compound (1-1) of the following formula was obtained while referring to JP 3561501.

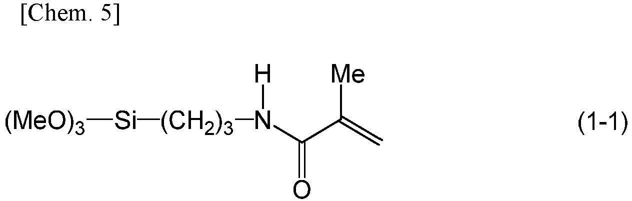

### [Synthesis Example 2]

A methacrylamide group-containing organosilicon compound (1-3) of the following formula was obtained while referring to JP 3561501.

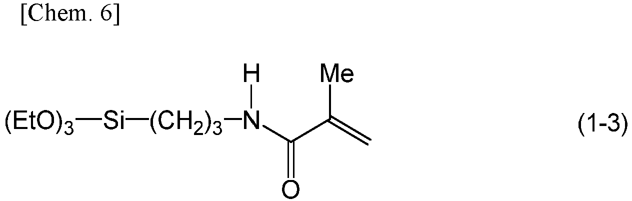

### [Synthesis Example 3]

An organosilicon compound (2-1) of the following formula was obtained while referring to JP 5494233.

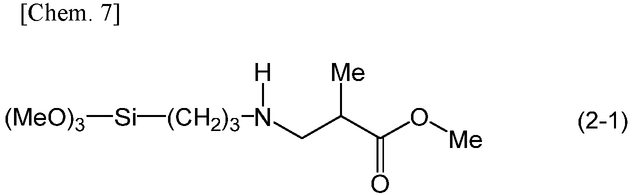

### [2] Preparation of Compositions

### [Examples 1-1 to 1-4]

Compositions were obtained by mixing together, in the proportions shown in Table 1, the compounds obtained in the above Synthesis Examples.

**[Table 1]**

| Make-up (pbw) | Example 1-1 | Example 1-2 | Example 1-3 | Example 1-4 |
|---|---|---|---|---|
| Composition | (i) | (ii) | (iii) | (iv) |
| Compound (1-1) | 90 | 95 | 99 | |
| Compound (1-3) | | | | 99 |
| Compound (2-1) | 10 | 5 | 1 | 1 |

### [3] Preparation of Aqueous Solutions

### [Examples 2-1 to 2-4, Comparative Examples 2-1 to 2-3]

Aqueous solutions were prepared by the dropwise addition of the respective compositions obtained in Examples 1-1 to 1-4, the compound obtained in Synthesis Example 1 or 2 or a comparative ingredient to 0.05 wt% acetic acid water in the proportions shown in Table 2 and at 25°C.

The following evaluations were carried out on the resulting aqueous solutions. The results are presented in Table 2.

### [Stability of Aqueous Solution]

The appearance of the resulting aqueous solution was visually checked after being left at rest for one day, 14 days or 28 days in a 25°C environment, and was evaluated according to the following criteria.
○: Complete dissolution has occurred, resulting in a uniform aqueous solution
×: Insoluble matter has separated out

### [Tensile Strength of Surface-Treated Glass Cloth]

E-glass cloth (thickness, 95 µm; weight per unit surface area, 107 g/m²) was dipped in the resulting aqueous solution, then taken out and dried under heating at 110°C for 10 minutes, giving a surface-treated glass cloth. The tensile strength of the resulting surface-treated glass cloth was measured in accordance with JIS R 3420:2013 (Testing Methods for Textile Glass Products). The tensile strength of untreated glass cloth was 150 N/25 mm.

**[Table 2]**

| | | Example 2-1 | Example 2-2 | Example 2-3 | Example 2-4 | Comp. Example 2-1 | Comp. Example 2-2 | Comp. Example 2-3 |
|---|---|---|---|---|---|---|---|---|
| Make-up (pbw) | 0.05 wt% Acetic acid water | 99.8 | 99.8 | 99.8 | 99.8 | 99.8 | 99.8 | 99.8 |
| | Composition (i) | 0.2 | | | | | | |
| | Composition (ii) | | 0.2 | | | | | |
| | Composition (iii) | | | 0.2 | | | | |
| | Composition (iv) | | | | 0.2 | | | |
| | Compound (1-1) | | | | | 0.2 | | |
| | Compound (1-3) | | | | | | 0.2 | |
| | KBM-503 | | | | | | | 0.2 |
| Stability of aqueous solution | after 1 day | ○ | ○ | ○ | ○ | ○ | ○ | ○ |
| | after 14 days | ○ | ○ | ○ | ○ | ○ | ○ | × |
| | after 28 days | ○ | ○ | ○ | ○ | × | × | × |
| Tensile strength of surface-treated glass cloth (N/25 mm) | | 320 | 320 | 340 | 340 | 340 | 330 | 300 |

| | | | | | | | | |
|---|---|---|---|---|---|---|---|---|
| • KBM-503: 3-Methacryloyloxypropyltrimethoxysilane, available from Shin-Etsu Chemical Co., Ltd. | | | | | | | | |

As shown in Table 2, each of the aqueous solutions in Examples 2-1 to 2-4 had an excellent stability. Also, the glass cloths treated with the aqueous solutions from Examples 2-1 to 2-4 had excellent tensile strengths.

On the other hand, each of the aqueous solutions in Comparative Examples 2-1 to 2-3 which did not contain Compound (2) had a poor stability. In these cases, insoluble matter separated out with the passage of time.

## Claims

1. A composition comprising a methacrylamide group-containing organosilicon compound of formula (1) below and an organosilicon compound of formula (2) below 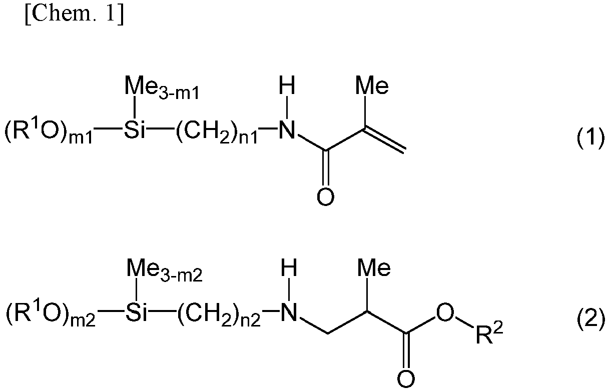 (wherein each R¹ is independently an alkyl group of 1 to 10 carbon atoms or an aryl group of 6 to 10 carbon atoms, R² is a methyl group or an ethyl group, Me stands for a methyl group, m1 and m2 are integers from 1 to 3, and n1 and n2 are integers from 1 to 12).

2. The composition of claim 1 wherein, in formulas (1) and (2), R¹ is a methyl group and n1 and n2 are each 3.

3. The composition of claim 1 or 2, wherein the content of the organosilicon compound of formula (2) is from 0.01 to 20 parts by weight per 100 parts by weight of the methacrylamide group-containing organosilicon compound of formula (1).

4. The composition of any one of claims 1 to 3 which further comprises water, wherein the methacrylamide group-containing organosilicon compound of formula (1) and the organosilicon compound of formula (2) are dissolved in the water.

5. The composition of claim 4, wherein the water is water that has been adjusted to acidity.

6. An article that has been surface treated with the composition of any one of claims 1 to 5.
